# EUROPEAN PATENT APPLICATION

(11) **EP 4 832 114 A1**
(43) Date of publication of application: **28.10.2026**
(21) Application number: 24907229.9
(22) Date of filing: 09.12.2024
(51) Int. Cl.: H01M 4/62, C08F 212/06, C08F 220/10, H01M 4/13, H01M 4/139

(54) **BINDER POLYMER FOR NONAQUEOUS SECONDARY BATTERY, BINDER FOR NONAQUEOUS SECONDARY BATTERY, BINDER COMPOSITION FOR NONAQUEOUS SECONDARY BATTERY, ELECTRODE SLURRY FOR NONAQUEOUS SECONDARY BATTERY, ELECTRODE FOR NONAQUEOUS SECONDARY BATTERY, NONAQUEOUS SECONDARY BATTERY, METHOD OF PRODUCING BINDER POLYMER FOR NONAQUEOUS SECONDARY BATTERY, METHOD OF PRODUCING BINDER FOR NONAQUEOUS SECONDARY BATTERY, METHOD OF PRODUCING BINDER COMPOSITION FOR NONAQUEOUS SECONDARY BATTERY, METHOD OF PRODUCING ELECTRODE SLURRY FOR NONAQUEOUS SECONDARY BATTERY, AND METHOD OF PRODUCING ELECTRODE FOR NONAQUEOUS SECONDARY BATTERY**

(30) Priority: 19.12.2023 JP 2023214286; 25.10.2024 JP 2024188626; 25.10.2024 JP 2024188627
(71) Applicant: Resonac Corporation, Tokyo 105-7325 (JP)
(72) Inventor: NAKAYAMA, Keito, Tokyo 105-7325 (JP); KONNO, Kaoru, Tokyo 105-7325 (JP); KAWAHARA, Yuta, Tokyo 105-7325 (JP); IKEHATA, Ryohsuke, Tokyo 105-7325 (JP); IIZUKA, Tatsuya, Tokyo 105-7325 (JP); HORIKOSHI, Hideo, Tokyo 105-7325 (JP)
(74) Representative: Berggren Oy
(86) International application number: PCT/JP2024/043485
(87) International publication number: WO 2025/134844

(57) **Abstract**

A binder polymer for a non-aqueous secondary battery includes: a first structural unit derived from an aromatic hydrocarbon monomer (a1) which is an aromatic compound having one ethylenically unsaturated bond and including a hydrocarbon; a second structural unit derived from a nonionic monomer (a2) which has one ethylenically unsaturated bond, and is a nonionic (meth)acrylic acid ester; a third structural unit derived from a carboxylic acid monomer (a3) which is a compound having one ethylenically unsaturated bond and at least one selected from the group consisting of a carboxy group, and a carboxy group forming a salt; and a fourth structural unit derived from an isocyanate monomer (a4) which is a compound having one ethylenically unsaturated bond and at least one selected from the group consisting of an isocyanato group and a blocked isocyanato group.

## Description

### [Technical Field]

The present disclosure relates to a binder polymer for a non-aqueous secondary battery, a binder for a non-aqueous secondary battery, a binder composition for a non-aqueous secondary battery, an electrode slurry for a non-aqueous secondary battery, an electrode for a non-aqueous secondary battery, a non-aqueous secondary battery, a method for manufacturing a binder polymer for a non-aqueous secondary battery, a method for manufacturing a binder for a non-aqueous secondary battery, a method for manufacturing a binder composition for a non-aqueous secondary battery, a method for manufacturing an electrode slurry for a non-aqueous secondary battery, and a method for manufacturing an electrode for a non-aqueous secondary battery.

### [Background Art]

Non-aqueous secondary batteries can be reduced in size and weight, and hence have been widely used as power supplies for notebook personal computers, mobile phones, power tools, electronic communication equipment, and the like. In recent years, non-aqueous secondary batteries have also been used as power supplies for electric vehicles and hybrid vehicles, and the like. A typical example of a non-aqueous secondary battery includes a lithium ion secondary battery.

A non-aqueous secondary battery includes a positive electrode including a metal oxide, or the like as an active material, a negative electrode including a carbon material such as graphite as an active material, and an electrolytic solution. The positive electrode and the negative electrode include a current collector and an electrode active material layer formed on the current collector. The electrode active material layer usually contains a binder, and by means of the binder, the active materials are bound together, and the active material and the current collector are bound together. Examples of binders for use in the non-aqueous secondary battery may include those described in PTL 1 and PTL 2.

PTL 1 discloses a secondary battery electrode including 100 parts by mass of at least one polymer selected from the group consisting of a styrene-butadiene copolymer and a copolymer resulting from a (meth)acrylic acid ester and a vinyl monomer having an acid component; and 1 to 20 parts by mass of at least one nonionic surfactant selected from the group consisting of polyoxyethylene alkyl ether derivatives, polyoxyethylene-polyoxypropylene condensates and polyoxyethylene-polyoxypropylene alkyl ether derivatives, having a cloudy point of 70°C or less.

PTL 2 discloses a binder for a lithium ion secondary battery electrode, having a glass transition temperature of 30°C or less, obtained by emulsion polymerization of 15 to 70 mass% of an ethylenically unsaturated monomer including styrene, an ethylenically unsaturated carboxylic acid ester, an ethylenically unsaturated carboxylic acid, and an internal crosslinking agent as essential components on the basis of the total amount of the ethylenically unsaturated monomers in the presence of a surfactant.

Furthermore, PTL 3 discloses a binder for an electrode, including a polymer having a structural unit derived from an alkyl (meth)acrylate ester monomer, a structural unit derived from a specific structural monomer having an aromatic group, and a structural unit derived from a monomer having at least one selected from the group consisting of an epoxy group, a (blocked) isocyanate group, and an urethane group.

### [Citation List]

### [Patent Literature]

[PTL 1] Japanese Patent Application Publication No. 2014-239070
[PTL 2] Japanese Patent Application Publication No. 2011-243464
[PTL 3] WO 2023/053863

### [Summary of Invention]

### [Technical Problem]

In recent years, non-aqueous secondary batteries have been required to maintain their battery performances sufficiently, even when they are exposed to high-temperature environment for a long time, namely, to have excellent high-temperature storability.

Under such circumstances, it is an object of the present disclosure to provide a binder polymer for a non-aqueous secondary battery, a binder for a non-aqueous secondary battery, a binder composition for a non-aqueous secondary battery, an electrode slurry for a non-aqueous secondary battery, and an electrode for a non-aqueous secondary battery, capable of obtaining a non-aqueous secondary battery having excellent high-temperature storability.

Also, it is an object of the present disclosure to provide a non-aqueous secondary battery having excellent high-temperature storability.

Further, it is another object of the present disclosure to provide respective methods for manufacturing the binder polymer for a non-aqueous secondary battery, the binder for a non-aqueous secondary battery, the binder composition for a non-aqueous secondary battery, the electrode slurry for a non-aqueous secondary battery, and the electrode for a non-aqueous secondary battery.

### [Solution to Problem]

The present disclosure includes the following aspects.
<1> A binder polymer for a non-aqueous secondary battery, including:
   a first structural unit derived from an aromatic hydrocarbon monomer (a1) which is an aromatic compound having one ethylenically unsaturated bond, and including a hydrocarbon;
   a second structural unit derived from a nonionic monomer (a2) which has one ethylenically unsaturated bond, and is a nonionic (meth)acrylic ester;
   a third structural unit derived from a carboxylic acid monomer (a3) which is a compound having one ethylenically unsaturated bond, and at least one selected from the group consisting of a carboxy group and a carboxy group forming a salt; and
   a fourth structural unit derived from an isocyanate monomer (a4) that is a compound having one ethylenically unsaturated bond, and at least one selected from the group consisting of an isocyanato group and a blocked isocyanato group.
<2> The binder polymer for a non-aqueous secondary battery according to <1>, wherein the blocked isocyanato group is of a structure generating an isocyanato group by at least one selected from the group consisting of heating, voltage application, and a chemical reaction.
<3> The binder polymer for a non-aqueous secondary battery according to <1> or <2>, wherein the content of the first structural unit in the total amount of the first structural unit, the second structural unit, the third structural unit, and the fourth structural unit is 35 mol% to 80 mol%.
<4> The binder polymer for a non-aqueous secondary battery according to any one of <1> to <3>, wherein the content ratio of the second structural unit in the total amount of the first structural unit, the second structural unit, the third structural unit, and the fourth structural unit is 10 mol% to 55 mol%.
<5> The binder polymer for a non-aqueous secondary battery according to any one of <1> to <4>, wherein the content ratio of the third structural unit in the total amount of the first structural unit, the second structural unit, the third structural unit, and the fourth structural unit is 1.0 mol% to 20 mol%.
<6> The binder polymer for a non-aqueous secondary battery according to any one of <1> to <5>, wherein the content ratio of the fourth structural unit in the total amount of the first structural unit, the second structural unit, the third structural unit, and the fourth structural unit is 0.10 mol% to 15 mol%.
<7> The binder polymer for a non-aqueous secondary battery according to any one of <1> to <6>, further including a fifth structural unit derived from a multifunctional monomer (a5) which is a compound having a plurality of independent ethylenically unsaturated bonds.
<8> The binder polymer for a non-aqueous secondary battery according to <7>, wherein the content ratio of the fifth structural unit relative to the total content of the first structural unit, the second structural unit, the third structural unit, and the fourth structural unit is 0.010 mol% to 5.0 mol%.
<9> The binder polymer for a non-aqueous secondary battery according to any one of <1> to <8>, wherein the total content ratio of the first structural unit, the second structural unit, the third structural unit, and the fourth structural unit is 90% by mass or more.
<10> A binder for a non-aqueous secondary battery including the binder polymer for a non-aqueous secondary battery according to any one of <1> to <9>.
<11> A binder composition for a non-aqueous secondary battery including the binder polymer for a non-aqueous secondary battery according to any one of <1> to <9>, and an aqueous medium.
<12> An electrode slurry for a non-aqueous secondary battery including the binder polymer for a non-aqueous secondary battery according to any one of <1> to <9>, an electrode active material, and an aqueous medium.
<13> An electrode for a non-aqueous secondary battery, including the binder polymer for a non-aqueous secondary battery according to any one of <1> to <9>.
<14> A non-aqueous secondary battery including the electrode for a non-aqueous secondary battery according to <13>.
<15> A method for manufacturing the binder polymer for a non-aqueous secondary battery according to any one of <1> to <9>, including
   performing copolymerization using the aromatic hydrocarbon monomer (a1), the nonionic monomer (a2), the carboxylic acid monomer (a3) and the isocyanate monomer (a4).
<16> A method for manufacturing a binder for a non-aqueous secondary battery, wherein the binder polymer for a non-aqueous secondary battery according to any one of <1> to <9> is mixed.
<17> A method for manufacturing a binder composition for a non-aqueous secondary battery, wherein the binder polymer for a non-aqueous secondary battery according to any one of <1> to <9> and an aqueous medium are mixed.
<18> A method for manufacturing a binder composition for a non-aqueous secondary battery, wherein the binder for a non-aqueous secondary battery according to <10> and an aqueous medium are mixed.
<19> A method for manufacturing an electrode slurry for a non-aqueous secondary battery, wherein the binder polymer for a non-aqueous secondary battery according to any one of <1> to <9>, an electrode active material, and an aqueous medium are mixed.
<20> A method for manufacturing an electrode slurry for a non-aqueous secondary battery, wherein the binder for a non-aqueous secondary battery according to <10>, an electrode active material, and an aqueous medium are mixed.
<21> A method for manufacturing an electrode slurry for a non-aqueous secondary battery, wherein the binder composition for a non-aqueous secondary battery according to <11> and an electrode active material are mixed.
<22> A method for manufacturing an electrode for a non-aqueous secondary battery, wherein the electrode slurry for a non-aqueous secondary battery according to <12> is applied onto at least a portion of the surface of a current collector and is dried.

### [Advantageous Effects of Invention]

The present disclosure can provide a binder polymer for a non-aqueous secondary battery, a binder for a non-aqueous secondary battery, a binder composition for a non-aqueous secondary battery, an electrode slurry for a non-aqueous secondary battery, and an electrode for a non-aqueous secondary battery, capable of obtaining a non-aqueous secondary battery having excellent high-temperature storability.

Further, the present disclosure can also provide a non-aqueous secondary battery having excellent high-temperature storability.

Furthermore, the present disclosure can provide respective methods for manufacturing the binder polymer for a non-aqueous secondary battery, the binder for a non-aqueous secondary battery, the binder composition for a non-aqueous secondary battery, the electrode slurry for a non-aqueous secondary battery, and the electrode for a non-aqueous secondary battery.

### [Description of Embodiments]

Hereinafter, embodiments will be described in detail. However, the present disclosure is not limited to the following embodiments. In the following embodiments, the constituent elements (including elemental steps, etc.) are not essential, unless otherwise specified. The same also applies to numerical values and ranges thereof and are not intended to limit the present disclosure.

In the numerical ranges shown with "to" in the present disclosure, the numerical values listed before and after "to" are included as minimum and maximum values, respectively.

In the numerical ranges stated in stages in the present disclosure, the upper limit value or the lower limit value stated within one numerical range may be replaced with the upper limit value or the lower limit value of the numerical range stated in other stages. In addition, in the numerical range described in the present disclosure, the upper limit value or the lower limit value of the numerical range may be replaced with the value shown in Examples.

In the present disclosure, each component may contain a plurality of types of the corresponding substances. When a plurality of substances corresponding to each component are present in the composition, or the like, the content ratio or content of each component means the total content ratio or content of the plurality of substances present in the composition, or the like, unless otherwise specified.

The term "layer" in the present disclosure also includes, in addition to the case where, when a region including the layer present therein is observed, the layer is formed over the entire region, the case where the layer is formed only on a part of the region.

In the present disclosure, "(meth)acrylic" is a generic term for acrylic and methacrylic. The "(meth)acrylates" is a generic name for acrylates and methacrylates.

In the present disclosure, "ethylenically unsaturated bond" refers to an ethylenically unsaturated bond having radical polymerizability, unless otherwise specified.

### (1) Binder polymer for non-aqueous secondary battery

A binder polymer for a non-aqueous secondary battery of the present disclosure includes:
a first structural unit derived from an aromatic hydrocarbon monomer (a1) which is an aromatic compound having one ethylenically unsaturated bond and including a hydrocarbon;
a second structural unit derived from a nonionic monomer (a2) which has one ethylenically unsaturated bond, and is a nonionic (meth)acrylic acid ester;
a third structural unit derived from a carboxylic acid monomer (a3) which is a compound having one ethylenically unsaturated bond and at least one selected from the group consisting of a carboxy group and a carboxy group forming a salt; and
a fourth structural unit derived from an isocyanate monomer (a4) which is a compound having one ethylenically unsaturated bond and at least one selected from the group consisting of an isocyanato group and a blocked isocyanato group.

Hereinafter, the "binder polymer for a non-aqueous secondary battery" in the present disclosure will be also referred to as a "binder polymer (P)".

The use of the binder polymer (P) having the foregoing configuration makes it possible to obtain a non-aqueous secondary battery excellent in high-temperature storability. Although the reason why this effect is exhibited is not clear, it is presumed as follows.

In the case of the isocyanato group or the blocked isocyanato group present in the binder polymer (P), it is considered that the isocyanato group which is generated by heating, voltage application, a chemical reaction, or the like, generates active species by an oxidation-reduction reaction at the time of charging and discharging in the non-aqueous secondary battery electrode. It is considered that the binder polymer (P) strongly protects the surface of the electrode active material due to the reaction between the active species and at least one of the electrolytic solution, and the coating (SEI) generated on the surface of the electrode active material by oxidation-reduction of the electrolytic solution. The surface of the electrode active material, which is strongly protected by the binder polymer (P) has excellent durability at temperatures as high as 60°C. This conceivably suppresses undesired decomposition reactions of the electrolytic solution and the electrolyte which are generated on the surface of the electrode active material during the high-temperature storage, resulting in an improvement of the high-temperature storability.

Although the above-mentioned action is considered to be exhibited particularly effectively on the electrode active material, even the constituent elements other than the electrode active material are considered to provide the effect sufficiently so long as they are the constituent elements that are to be exposed to an electrolytic solution and to react with an isocyanato group.

The binder polymer (P) includes at least a first structural unit derived from an aromatic hydrocarbon monomer (a1), a second structural unit derived from a nonionic monomer (a2), and a third structural unit derived from a carboxylic acid monomer (a3), and a fourth structural unit derived from an isocyanate monomer (a4).

Here, the structural units contained in the polymer are bonded to each other by a polymerization reaction of ethylenically unsaturated bonds possessed by the respective monomers. Further, the structural units contained in the polymer are covalently bonded together unless otherwise specified.

Note that, in the case of a polymer having a structural unit A derived from a compound A having an ethylenically unsaturated bond, as an example, the chemical structure of the portion other than the portion corresponding to the ethylenically unsaturated bond of the compound A in the structural unit A of the polymer is the same as the chemical structure of the portion other than the ethylenically unsaturated bond of the compound A before polymerization. For example, the structural unit derived from styrene has the structure of "-CH₂CH(C₆H₅ (phenyl group))-" in a binder polymer (P).

In the present disclosure, a monomer derived from a certain structural unit in a polymer refers to a compound having a structure in which, in the structural unit, bonds between two carbon atoms forming the main chain of the polymer are replaced by ethylenically unsaturated bonds and are separated from other structural units.

Further, when the portion other than the main chain structure corresponding to an ethylenically unsaturated bond in a polymer, for example, the structure of a functional group such as a carboxy group, is changed by a chemical reaction, or the like, the structural units are classified on the basis of the chemical structure after change. For example, when vinyl acetate is polymerized and then is saponified, the structural unit is not referred to as a structural unit derived from vinyl acetate, but as a structural unit derived from vinyl alcohol. For example, when ion exchange is carried out after performing polymerization of monomers having an ionic functional group, the structural units are classified on the basis of the chemical structure after ion exchange. Specifically, for example, when the corresponding structural unit is set to "-CH₂CH(COOH)-" by ion exchange after the polymerization of sodium acrylate, the structural unit is referred to not as a structural unit derived from sodium acrylate, but as a structural unit derived from an acrylic acid.

The binder polymer (P) may further include one or two or more other structural units, not corresponding to any of the first structural unit, the second structural unit, the third structural unit and the fourth structural unit. The other structural units include, but are not limited to, a fifth structural unit derived from a multifunctional monomer (a5) which is a compound having a plurality of independent ethylenically unsaturated bonds. Herein, the term "plurality of independent ethylenically unsaturated bonds" means a plurality of ethylenically unsaturated bonds which do not form conjugated dienes with each other.

For the fifth structural unit, one or more ethylenically unsaturated bonds may remain in the structural unit. For example, in the case of a divinylbenzene polymer, the structural unit derived from divinylbenzene may be of a structure having no ethylenically unsaturated bond (the form in which both of the portions corresponding to the two ethylenically unsaturated bonds of divinylbenzene are incorporated into the chain of the polymer) or may be of a structure having one ethylenically unsaturated bond (the form in which only the portion corresponding to one ethylenically unsaturated bond is incorporated into the chain of the polymer).

### [First structural unit]

The aromatic hydrocarbon monomer (a1) from which the first structural unit is derived includes a hydrocarbon and does not include atoms such as an oxygen atom. Then, the aromatic hydrocarbon monomer (a1) includes an aromatic ring. The first structural unit may have one aromatic ring, and may have two or more aromatic rings in one structural unit. In the first structural unit, the number of aromatic rings included in one structural unit is preferably 1 to 4, and more preferably 1.

As the aromatic ring included in the aromatic hydrocarbon monomer (a1), mention may be made of a benzene ring.

The aromatic rings included in the aromatic hydrocarbon monomer (a1) may have a substituent. When the aromatic ring has a substituent, the number of the substituents possessed by the aromatic ring may be one, and may be two or more. As the substituents that the aromatic ring can have, mention may be made of an alkyl group, an alkoxy group, an acetyl group, an amino group, halogen, and the like. When the substituent that the aromatic ring can have is an alkyl group, it is preferable that the alkyl group has 1 to 3 carbon atoms, and a methyl group is more preferable.

In the binder polymer (P), the first structural units may include singly alone or may be included two or more thereof.

As the aromatic hydrocarbon monomer (a1) from which the first structural unit is derived, mention may be made of styrene, t-butylstyrene, α-methylstyrene, p-methylstyrene, 1,1-diphenylethylene, and the like.

The aromatic hydrocarbon monomer (a1) from which the first structural unit is derived preferably includes at least one selected from the group consisting of styrene and alkylated styrenes in which at least one hydrogen atom of styrene is substituted with an alkyl group.

Th proportion of the total amount of the structural units derived from styrene and an alkylated styrene in the first structural unit is preferably 80 mol% or more, may be 90 mol% or more, and may be 100 mol%.

The proportion of the structural unit derived from styrene in the first structural unit is preferably 80 mol% or more, may be 90 mol% or more, and may be 100 mol%.

### [Second structural unit]

The nonionic monomer (a2) from which the second structural unit is derived has one ethylenically unsaturated bond, and is a nonionic (meth)acrylic acid ester having no anionic functional group nor cationic functional group.

In the binder polymer (P), the second structural units may be included singly alone, and may be included two or more thereof.

The nonionic monomer (a2) from which the second structural unit is derived preferably includes a (meth)acrylic acid ester, and more preferably includes a (meth)acrylic acid alkyl ester.

The proportion of the structural unit derived from a (meth)acrylic acid ester in the second structural unit is preferably 60 mol% or more, may be 75 mol% or more, may be 90 mol% or more, and may be 100 mol%.

The proportion of the structural unit derived from an alkyl (meth)acrylic acid ester in the second structural unit is preferably 60 mol% or more, may be 75 mol% or more, may be 90 mol% or more, and may be 100 mol%.

The number of carbon atoms of the alkyl group in the alkyl (meth)acrylic acid ester is preferably 1 to 20, more preferably 1 to 18, and further preferably 4 to 16. The alkyl group in the alkyl (meth) acrylic acid ester may be any of linear, branched or cyclic.

Examples of alkyl (meth)acrylic acid esters may include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, and stearyl (meth)acrylate. Of these, the alkyl (meth)acrylic acid ester preferably contains 2-ethylhexyl (meth) acrylate from the viewpoint of forming the electrode active material layer having excellent electrolytic solution resistance.

The second structural unit may have a polar functional group. Polar functional groups include, but are not limited to, a hydroxy group, a cyano group, and the like. It should be noted that the hydroxy group as a polar functional group conceptually does not include an OH structure contained in an ionic functional group such as a carboxy group or a sulfo group (sulfonic acid group).

The second structural unit may have one polar functional group, or two or more polar functional groups in one structural unit. Also, when two or more polar functional groups are included in one structural unit, the two or more polar functional groups may be the same or different. Further, the binder polymer (P) may include two or more types of second structural units having different polar functional groups.

Examples of nonionic monomers having polar functional groups (a2) may include 2-hydroxyethyl (meth)acrylate, 2-hydroxypropyl (meth)acrylate, and (meth)acrylonitrile.

### [Third structural unit]

The third structural unit has at least one selected from the group consisting of a carboxy group and a carboxy group forming a salt. A salt forming carboxy group refers to a group in which the carboxy group forms a salt with a basic substance.

The third structural unit may have one carboxy group or may have two or more carboxy groups in one structural unit. The third structural unit may have one carboxyl group forming a salt or two or more carboxy groups forming a salt in one structural unit.

In the third structural unit, the total number of carboxy groups and carboxy groups forming salts included in one structural unit is preferably 1 to 4, and more preferably 1 to 2.

In the binder polymer (P), the third structural units may be included singly alone, or may be included two or more kinds.

As the carboxylic acid monomers (a3) from which the third structural unit is derived, mention may be made of unsaturated monocarboxylic acids such as methacrylic acid, acrylic acid, and crotonic acid; unsaturated dicarboxylic acids such as itaconic acid and fumaric acid; and the like. From the viewpoint of suppressing the peeling of the electrode active material layer from the current collector, the carboxylic acid monomer (a3) preferably contains at least one selected from the group consisting of acrylic acid, methacrylic acid, and itaconic acid.

The proportion of the structural unit derived from acrylic acid, methacrylic acid, and itaconic acid in the third structural unit (when two or more types are included, the total proportion of the structural units derived therefrom) is preferably 80 mol% or more, and may be 90 mol% or more, and may be 100 mol%.

Further, the carboxylic acid monomer (a3) may contain both of an unsaturated monocarboxylic acid and an unsaturated dicarboxylic acid from the viewpoint of improving the adhesion between the binder polymer and an active material or a current collector. When the carboxylic acid monomer (a3) includes both of an unsaturated monocarboxylic acid and an unsaturated dicarboxylic acid, the content ratio of the unsaturated dicarboxylic acid relative to the total amount of the unsaturated monocarboxylic acid and unsaturated dicarboxylic acid is preferably 1 mol% or more, may be 5 mol% or more, may be 10 mol% or more, and may be 15 mol% or more. Further, the content ratio of the unsaturated dicarboxylic acid relative to the total amount of the unsaturated monocarboxylic acid and the unsaturated dicarboxylic acid is preferably 70 mol% or less, more preferably 50 mol% or less, may be 40 mol% or less, and may be 30 mol% or less.

As the salt, mention may be made of a metal salt, an ammonium salt, and the like. Examples of the metal salt may include alkali metal salts such as a lithium salt, a sodium salt, and a potassium salt. As the carboxylic acid monomer (a3) from which the third structural unit having a carboxy group forming a salt is derived, mention may be made of lithium (meth)acrylate, lithium itaconate, dilithium itaconate, sodium (meth)acrylate, sodium itaconate, disodium itaconate, ammonium (meth)acrylate, ammonium itaconate, diammonium itaconate, and the like.

### [Fourth structural unit]

The fourth structural unit has at least one selected from the group consisting of an isocyanato group and a blocked isocyanato group. In the binder polymer (P), the fourth structural units may be included singly alone, and may be included two or more thereof.

As the isocyanate monomer (a4) from which the fourth structural unit is derived, mention may be made of compounds having a (meth)acryloyl group, a vinyl group or an allyl group, and from the viewpoint of the availability and the polymerization reactivity: a compound having a (meth)acryloyl group is preferable. The isocyanate monomer (a4) is preferably a compound having at least one selected from the group consisting of an isocyanato group and a blocked isocyanato group and a (meth)acryloyl group, and more preferably a (meth)acrylic acid ester having at least one selected from the group consisting of an isocyanato group and a blocked isocyanato group.

The proportion of the structural unit derived from the (meth)acrylic acid ester having at least one selected from the group consisting of an isocyanato group and a blocked isocyanato group in the fourth structural unit is preferably 80 mol% or more, may be 90 mol% or more, and may be 99 mol% or more.

In the total amount of the isocyanato groups and the blocked isocyanato groups possessed by the binder polymer (P), the proportion occupied by the blocked isocyanato groups is preferably 50 mol% or more, may be 70 mol% or more, may be 90 mol% or more, and may be 100 mol%. The blocked isocyanato group tends to suppress the isocyanato group from being converted into an amino group by hydrolysis.

The blocked isocyanato group indicates a functional group formed by bonding between an isocyanato group and a blocking agent. Preferably, the blocked isocyanato group is of a structure capable of controlling the conversion into an isocyanato group.

The blocked isocyanato group is preferably of a structure to generate an isocyanato group by external stimulation, a chemical reaction, or the like, and is more preferably of a structure generating an isocyanato group by at least one selected from the group consisting of heating, voltage application, and a chemical reaction. The conversion of the blocked isocyanato groups to isocyanato groups can be caused by elimination of a blocking agent by an oxidation-reduction reaction due to a reaction by heating, chemical reaction with Lewis acid, Bronsted acid, or the like, an electrochemical reaction by voltage application, or the like.

As the blocking agent, mention may be made of methyl salicylate, 3,5-dimethylpyrazole, 2-butanone=oxime (methyl ethyl ketoxime), ε-caprolactam, 1-methoxy-2-propanol, or the like. From the viewpoint of easy elimination, the blocking agent preferably includes at least one selected from the group consisting of methyl salicylate, 3,5-dimethylpyrazole and 2-butanone=oxime.

### [Fifth structure unit]

The binder polymer (P) may include and may not include a fifth structural unit derived from a multifunctional monomer (a5). From the viewpoint of ensuring the electrolytic solution resistance of the binder polymer (P), the binder polymer (P) preferably includes a fifth structural unit. The binder polymer (P) may have a crosslinked structure formed by the fifth structural unit. In the binder polymer (P), the fifth structural units may be included singly alone, and may be included two or more thereof.

The number of ethylenically unsaturated bonds included in the multifunctional monomer (a5) is 2 or more, preferably 2 to 6, may be 2 to 4, and may be 2 or 3.

Examples of the multifunctional monomer (a5) from which the fifth structural unit is derived may include a compound having two ethylenically unsaturated bonds such as divinylbenzene, ethylene glycol di(meth)acrylate, 1,6-hexanediol di(meth)acrylate, and 2-hydroxy-3-acryloyloxypropyl methacrylate; and a compound having three or more ethylenically unsaturated bonds such as trimethylolpropane tri(meth)acrylate. From the viewpoint of the polymerization stability in manufacturing of the binder polymer (P), the fifth structural unit preferably includes a structural unit derived from divinylbenzene. The proportion of the structural unit derived from divinylbenzene in the fifth structural unit is preferably 80 mol% or more, may be 90 mol% or more, and may be 100 mol%.

### [Other structural units]

The compounds from which other structural units which do not correspond to any of the first to fifth structural units is derived include, but are not limited to, compounds having one ethylenically unsaturated bond and having other anionic functional groups than carboxy groups such as a sulfo group and a phosphate group or salts thereof, surfactants having one ethylenically unsaturated bond (which may be hereinafter referred to as "polymerizable surfactants"), a compound having one ethylenically unsaturated bond and having a function as a silane coupling agent (which may be hereinafter referred to as a "polymerizable silane coupling agent"); and the like.

As the compound having one ethylenically unsaturated bond and having a sulfo group and salts thereof, mention may be made of aromatic vinyl compounds having a sulfo group, aromatic vinyl compounds having a sulfo group forming a salt, and the like. Among them, the binder polymer (P) preferably contains a structural unit derived from para-styrenesulfonic acid, and from the viewpoint of the polymerization stability in manufacturing of the binder polymer (P), it is more preferable that a part or all of the sulfo groups form a salt.

Examples of the polymerizable surfactant from which the other structural units can be derived may include compounds represented by the following formulae (1) to (4).

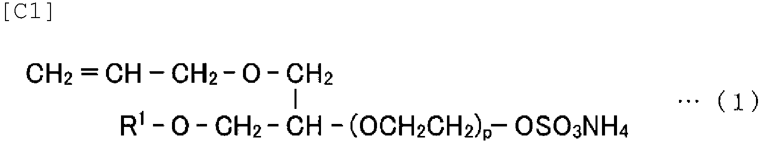

In the formula (1), R¹ represents an alkyl group, and p represents an integer of 10 to 40.

The number of carbon atoms of the alkyl group represented by R¹ is preferably 5 to 20.

The alkyl group represented by R¹ may be any of linear, branched, and cyclic, and is preferably linear.

The alkyl group represented by R¹ may have a substituent, but is preferably unsubstituted.

R¹ is more preferably a linear unsubstituted alkyl group having 5 to 20 carbon atoms.

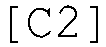

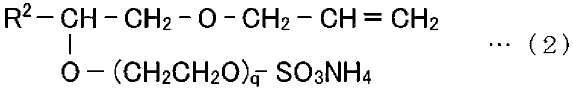

In the formula (2), R² represents an alkyl group, and q represents an integer of 10 to 40.

The number of carbon atoms of the alkyl group represented by R² is preferably 5 to 20.

The alkyl group represented by R² may be any of linear, branched, and cyclic, and is preferably linear.

The alkyl group represented by R² may have a substituent, and is preferably unsubstituted.

R² is more preferably a linear unsubstituted alkyl group having 5 to 20 carbon atoms.

As the compound represented by formula (2), mention may be made of polyoxyethylene-1-(allyloxymethyl) alkyl ether sulfate ammonium salt (AQUALON KH-10, manufactured by DKS Co., Ltd.).

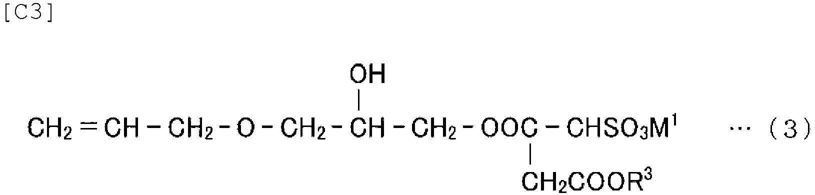

In the formula (3), R³ represents an alkyl group, and M¹ represents NH₄ or Na.

The number of carbon atoms of the alkyl group represented by R³ is preferably 5 to 20.

The alkyl group represented by R³ may be any of linear, branched, and cyclic, and is preferably linear.

The alkyl group represented by R³ may have a substituent, and is preferably unsubstituted.

R³ is more preferably a linear unsubstituted alkyl group having 5 to 20 carbon atoms.

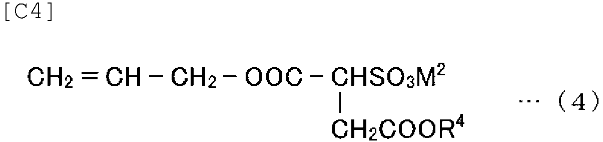

In the formula (4), R⁴ represents an alkyl group, and M² represents NH₄ or Na.

The number of carbon atoms of the alkyl group represented by R⁴ is preferably 5 to 20.

The alkyl group represented by R⁴ may be any of linear, branched, and cyclic, and is preferably linear.

The alkyl group represented by R⁴ may have a substituent, and is preferably unsubstituted.

R⁴ is more preferably a linear unsubstituted alkyl group having 5 to 20 carbon atoms.

As the polymerizable silane coupling agents from which other structural units can be derived, mention may be made of vinyl trimethoxysilane, γ-methacryloxypropyl trimethoxysilane, vinyl triethoxysilane, γ-methacryloxypropyl triethoxysilane, and the like.

### [Content ratio of each structural unit in binder polymer (P)]

The total content ratio of the first structural unit, the second structural unit, the third structural unit, and the fourth structural unit (hereinafter, "the first structural unit, the second structural unit, the third structural unit, and the fourth structural unit" may also be referred to as "first to fourth structural units") in the binder polymer (P) is preferably 90% by mass or more, more preferably 95% by mass or more, further preferably 97% by mass or more, may be 98% by mass or more, and may be 100% by mass. The total content ratio of the first to fourth structural units in the binder polymer (P) may be 99.5% by mass or less.

The total content ratio of the first to fourth structural units in the binder polymer (P) may be 90% by mass to 100% by mass, may be 95% by mass to 100% by mass, may be 97% by mass to 99.5% by mass, and may be 98% by mass to 99.5% by mass.

Hereinafter, the content ratio of each structural unit in the first to fourth structural units means the proportion occupied by the amount of each structural unit in the total amount of the first structural unit, the second structural unit, the third structural unit, and the fourth structural unit.

The content ratio of the first structural unit in the first to fourth structural units is preferably 35 mol% or more, more preferably 40 mol% or more, and further preferably 45 mol% or more. The content ratio of the first structural unit in the first to fourth structural units may be 53 mol% or more, and may be 59 mol% or more. When the content ratio of the first structural unit is within the above range, the heat resistance of the binder polymer (P) is improved, so that the durabilities of the electrode using the binder polymer (P) and the battery including the electrode during storage at high temperatures tend to be excellent.

The content ratio of the first structural unit in the first to fourth structural units is preferably 80 mol% or less, more preferably 70 mol% or less, and further preferably 65 mol% or less. The content ratio of the first structural unit in the first to fourth structural units may be 59 mol% or less, and may be 53 mol% or less. When the content ratio of the first structural unit is within the above range, the flexibility of the binder polymer (P) is improved, so that the processability of the electrode using the binder polymer (P) tends to be ensured.

The content ratio of the first structural unit in the first to fourth structural units may be 35 mol% to 80 mol%, may be 40 mol% to 70 mol %, may be 45 mol% to 65 mol%, may be 53 mol% to 59 mol%, may be 59 mol% to 65 mol%, and may be 45 mol% to 53 mol%.

The content ratio of the second structural unit in the first to fourth structural units is preferably 10 mol% or more, more preferably 15 mol% or more, and further preferably 20 mol% or more. The content ratio of the second structural unit in the first to fourth structural units may be 25 mol% or more, and may be 34 mol% or more. When the content ratio of the second structural unit is within the above range, the flexibility of the binder polymer (P) is improved, so that the processability of the electrode using the binder polymer (P) tends to be ensured.

The content ratio of the second structural unit in the first to fourth structural units is preferably 55 mol% or less, more preferably 50 mol% or less, and further preferably 45 mol% or less. The content ratio of the first structural unit in the first to fourth structural units may be 40 mol% or less, and may be 34 mol% or less. When the content ratio of the second structural unit is within the above range, swelling and elution of the binder polymer (P) with respect to the electrolytic solution are suppressed, so that peeling of the electrode active material layer from the current collector under electrolytic solution immersion environment tends to be more suppressed.

The content ratio of the second structural unit in the first to fourth structural units may be 10 mol% to 55 mol%, may be 15 mol% to 50 mol%, may be 20 mol% to 45 mol%, may be 25 mol% to 40 mol%, may be 34 mol% to 40 mol%, and may be 25 mol% to 34 mol%.

With regard to the first structural unit and the second structural unit, the kind of the monomer and its amount are preferably set as appropriate from the viewpoint of adjusting the glass transition point of the binder polymer (P) or the viewpoint of adjusting the polymerization rate in accordance with the molecular design.

The content ratio of the third structural unit in the first to fourth structural units is preferably 1.0 mol% or more, more preferably 4.0 mol% or more, further preferably 6.0 mol% or more, and particularly preferably 7.5 mol% or more, from the viewpoint of more suppressing peeling of the electrode active material layer from the current collector.

The content ratio of the third structural unit in the first to fourth structural units is preferably 20 mol% or less, more preferably 15 mol% or less, and further preferably 10 mol% or less, from the viewpoint of the polymerization stability in manufacturing the binder polymer (P).

The content ratio of the third structural unit in the first to fourth structural units may be 1.0 mol% to 20 mol%, may be 4.0 mol% to 15 mol%, and may be 7.5 mol% to 10 mol%.

The content ratio of the fourth structural unit in the first to fourth structural units is preferably 0.10 mol% or more, more preferably 0.40 mol% or more, and further preferably 0.60 mol% or more. The content ratio of the fourth structural unit in the first to fourth structural units may be 0.90 mol% or more, may be 2.5 mol% or more, and may be 4.5 mol% or more. When the content ratio of the fourth structural unit is within the above range, the electrode containing the binder polymer (P) tends to be still more improved in high-temperature storability.

The content ratio of the fourth structural unit in the first to fourth structural units is preferably 15 mol% or less, more preferably 10 mol% or less, further preferably 7.5 mol% or less, and particularly preferably 6.5 mol% or less. The content ratio of the fourth structural unit in the first to fourth structural units may be 4.5 mol% or less, may be 2.5 mol% or less, and may be 0.90 mol% or less. When the content ratio of the fourth structural unit is within the above range, the yield is improved by the improvement of the polymerization stability in manufacturing of the binder polymer (P), so that the manufacturing cost of the binder polymer (P) tends to be able to be reduced.

The content ratio of the fourth structural unit in the first to fourth structural units may be 0.10 to 15 mol%, may be 0.40 to 10 mol%, may be 0.60 to 7.5 mol%, may be 0.60 to 6.5 mol%, may be 0.60 to 4.5 mol%, may be 0.60 to 2.5 mol%, may be 0.60 to 0.90 mol%, may be 0.90 to 6.5 mol%, may be 2.5 to 6.5 mol%, and may be 4.50 to 6.5 mol%.

When the binder polymer (P) includes a fifth structural unit, the content ratio of the fifth structural unit relative to the total content of the first to fourth structural units is preferably 0.010 mol% or more, more preferably 0.020 mol% or more, and further preferably 0.030 mol% or more. When the content ratio of the fifth structural unit is within the above range, locations of internal crosslinking in the binder polymer (P) increase to suppress the deterioration of the binder polymer (P), so that a non-aqueous secondary battery having more excellent cycle characteristics tends to be obtained.

The content ratio of the fifth structural unit relative to the total content of the first to fourth structural units is preferably 5.0 mol% or less, more preferably 1.0 mol% or less, further preferably 0.10 mol% or less, and particularly preferably 0.070 mol parts or less, from the viewpoint of inhibiting gelation of the binder polymer (P).

The content ratio of the fifth structural unit relative to the total content of the first to fourth structural units may be 0.010 mol% to 5.0 mol%, may be 0.020 mol% to 1.0 mol%, may be 0.030 mol% to 0.10 mol%, and may be 0.030 mol% to 0.070 mol%.

When the binder polymer (P) includes, as other structural units, a structural unit derived from a compound having one ethylenically unsaturated bond and having a sulfo group or a salt thereof (which is also referred to as a "structural unit having a sulfo group"), the content ratio of the structural unit having a sulfo group relative to the total content of the first to fourth structural units is preferably 0.10 mol% or more, more preferably 0.20 mol% or more, and further preferably 0.30 mol% or more. When the content ratio of the structural unit having a sulfo group is within the above range, the yield is improved by the improvement of the polymerization stability in manufacturing of the binder polymer (P), so that the manufacturing cost of the binder polymer (P) tends to be able to be reduced.

The content ratio of the structural units having a sulfo group relative to the total content of the first to fourth structural units is preferably 5.0 mol% or less, more preferably 3.0 mol% or less, further preferably 1.0 mol% or less, and may be 0.50 mol% or less. When the content ratio of the structural unit having a sulfo group is within the above range, the particle size, the viscosity, and the like of the binder polymer (P) tend to be adjusted as appropriate.

The content ratio of the structural units having a sulfo group relative to the total content of the first to fourth structural units may be 0.10 mol% to 5.0 mol%, may be 0.20 mol% to 3.0 mol%, may be 0.30 mol% to 1.0 mol%, and may be 0.30 mol% to 0.50 mol%.

### [Glass transition point Tg of binder polymer (P)]

The glass transition point Tg of the binder polymer (P) is preferably -30°C or more, more preferably -20°C or more, further preferably -10°C or more, and particularly preferably 0°C or more. When the glass transition point Tg of the binder polymer (P) falls within the above range, a non-aqueous secondary battery provided with electrodes containing the binder polymer (P) tends to exhibit excellent cycle characteristics.

The glass transition point Tg of the binder polymer (P) is preferably 100°C or less, more preferably 50°C or less, further preferably 30°C or less, may be 20°C or less, and may be 10°C or less. When the glass transition point Tg is within the above range, the deposition property of the binder polymer (P) is improved, so that the non-aqueous secondary battery provided with an electrode including the binder polymer (P) tends to have excellent cycle characteristics.

The glass transition point Tg of the binder polymer (P) may be -30°C to 100°C, may be -20°C to 50°C, may be -10°C to 30°C, may be 0°C to 30°C, may be 0°C to 20°C, and may be 0°C to 10°C.

The glass transition point Tg of the binder polymer (P) is the peak top temperature of the chart obtained as temperature differential by performing the measurement at a heating rate of 10°C/min, under a nitrogen gas atmosphere using a differential scanning calorimetry (DSC) apparatus (for example, EXSTAR DSC/SS7020 manufactured by Hitachi High-Tech Science, Ltd.).

### [Method for manufacturing binder polymer (P)]

The binder polymer (P) of the present disclosure can be manufactured by copolymerizing the monomers for forming the respective structural units (polymerization step). The monomers for use in synthesis of the binder polymer (P) include an aromatic hydrocarbon monomer (a1), a nonionic monomer (a2), a carboxylic acid monomer (a3) and an isocyanate monomer (a4); and may further include other monomers. The plurality of kinds of monomers are also collectively referred to as "monomers (a)".

As a method for copolymerizing the monomer (a), for example, an emulsion polymerization method for emulsion-polymerizing the monomer (a) in an aqueous medium (b) can be mentioned. When the binder polymer (P) is manufactured by an emulsion polymerization method, in addition to the monomer (a) and an aqueous medium (b), components such as a non-polymerizable surfactant (c), a basic substance (d), a radical polymerization initiator (e), and a chain transfer agent (f) can be used.

### -Aqueous medium (b)-

The aqueous medium (b) is preferably at least one selected from the group consisting of water and hydrophilic solvents. The hydrophilic solvents may be used singly alone or in combination of two or more thereof. As the hydrophilic solvents, mention may be made of methanol, ethanol, isopropyl alcohol, N-methylpyrrolidone, and the like. The aqueous medium (b) is preferably water from the viewpoint of the polymerization stability. As the aqueous medium (b), a mixture obtained by adding a hydrophilic solvent to water may be used.

### -Non-polymerizable surfactant (c)-

When the binder polymer (P) is manufactured by an emulsion polymerization method, emulsion polymerization may be performed by allowing a liquid containing an aqueous medium (b) and a monomer (a) to contain a non-polymerizable surfactant (c). The non-polymerizable surfactant (c) is a surfactant (c) having no ethylenically unsaturated bond in its chemical structure. The surfactant (c) improves the dispersion stability of at least one of the liquid during emulsion polymerization and the dispersion (emulsion) obtained after the polymerization. As the surfactant (c), an anionic surfactant or a nonionic surfactant is preferably used.

Examples of the anionic surfactants may include alkylbenzene sulfonic acid salts, alkyl sulfate ester salts, polyoxyethylene alkyl ether sulfate ester salts, and fatty acid salts.

Examples of the nonionic surfactants may include polyoxyethylene alkyl ethers, polyoxyethylene alkyl phenyl ethers, polyoxyethylene polycyclic phenyl ethers, polyoxyalkylene alkyl ethers, sorbitan fatty acid esters, and polyoxyethylene sorbitan fatty acid esters.

The surfactants (c) may be used singly alone or in combination of two or more thereof.

### -Basic substance (d)-

When the binder polymer (P) is manufactured by an emulsion polymerization method, the basic substance (d) may be added to at least one of a liquid to be emulsion-polymerized including the aqueous medium (b) and the monomer (a) and a dispersion after emulsion polymerization. The addition of the basic substance (d) neutralizes the acidic component included in the monomer (a). As a result, the pH of the liquid to which the basic substance (D) has been added falls within a proper range, so that the stability of the liquid becomes favorable.

As the basic substances (d), mention may be made of ammonia, triethylamine, sodium hydroxide, lithium hydroxide, and the like. The basic substance (d) may be used singly alone or in combination of two or more thereof.

### -Radical polymerization initiator (e)-

When the binder polymer (P) is manufactured by the emulsion polymerization method, a radical polymerization initiator (e) may be used. As the radical polymerization initiators (e), mention may be made of persulfates such as ammonium persulfate and potassium persulfate; hydrogen peroxide; an azo compound; and organic peroxides such as tert-butyl hydroperoxide, tert-butyl peroxybenzoate and cumene hydroperoxide.

For manufacturing of the binder polymer (P) by an emulsion polymerization method, a reducing agent such as sodium bisulfite, rongalite, or ascorbic acid may be used in combination with a radical polymerization initiator (e) for redox polymerization.

The addition amount of the radical polymerization initiator (e) (when a reducing agent is used in combination, the reducing agent is included) is preferably 0.001 parts by mass or more, more preferably 0.002 parts by mass or more, further preferably 0.005 parts by mass or more, and particularly preferably 0.01 parts by mass or more for every 100 parts by mass of the monomer (a). When the addition amount of the radical polymerization initiator (e) is within the above range, the conversion rate of the monomer (a) into the binder polymer (P) tends to be able to be increased when the binder polymer (P) is manufactured by an emulsion polymerization method.

The addition amount of the radical polymerization initiator (e) to be added is preferably 10 parts by mass or less, more preferably 5.0 parts by mass or less, further preferably 2.0 parts by mass or less, and particularly preferably 1.0 part by mass, or less for every 100 parts by mass of the monomer (a). When the addition amount of the radical polymerization initiator (e) is within the above range, the molecular weight of the binder polymer (P) can be increased, so that the rate of swelling of the non-aqueous secondary battery electrode including the binder polymer (P) relative to the electrolytic solution tends to be able to be reduced.

The addition amount of the radical polymerization initiator (e) to be added may be 0.001 parts by mass to 10 parts by mass, may be 0.002 parts by mass to 5.0 parts by mass, may be 0.005 parts by mass to 2.0 parts by mass, and may be 0.01 parts by mass to 1.0 part by mass for every 100 parts by mass of the monomer (a).

### -Chain transfer agent (f)-

When the binder polymer (P) is manufactured by an emulsion polymerization method, a chain transfer agent (f) may be used from the viewpoint of adjusting the molecular weight of the binder polymer (P) obtainable by emulsion polymerization. As the chain transfer agents (f), mention may be made of n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, benzyl alcohol, α-methylstyrene dimer, and the like.

### (Emulsion polymerization method)

As the emulsion polymerization method to be used for manufacturing the binder polymer (P), mention may be made of a method in which emulsion polymerization is carried out while continuously feeding each component for use in emulsion polymerization into a reaction vessel, or the like. The temperature of the emulsion polymerization is not particularly limited; for example, the temperature may be 30°C to 90°C, may be 50°C to 85°C, and may be 55°C to 80°C. The emulsion polymerization is preferably carried out with stirring. In addition, it is preferable to continuously feed the monomer (a) and the radical polymerization initiator (e) to the liquid during the emulsion polymerization so that the concentrations of the monomer (a) and the radical polymerization initiator (e) becomes uniform in the liquid during the emulsion polymerization.

### (2) Binders for non-aqueous secondary batteries

The binder for a non-aqueous secondary battery of the present disclosure includes the binder polymer (P) of the present disclosure.

Incidentally, in some cases, in the binder for a non-aqueous secondary battery, the functional groups and the like contained in the binder polymer (P) may react with other components, and the structure of the binder polymer (P) may be partially changed. In this case, the structure of the binder polymer (P) after the reaction is also referred to as the binder polymer (P). Namely, in the binder for a non-aqueous secondary battery, the binder polymer (P) also includes the corresponding polymer and the structure obtained after the reaction between the polymer and the other components.

The binder for a non-aqueous secondary battery may contain a polymer other than the binder polymer (P), a surfactant, and the like. The binder for a non-aqueous secondary battery is obtained by mixing these components.

The binder for a non-aqueous secondary battery includes components that remain without volatilization even when the steps involving heating in the method for manufacturing a non-aqueous secondary battery described later are performed with respect to a binder composition for a non-aqueous secondary battery described later. Specifically, the components constituting the binder for a non-aqueous secondary battery is the component left as a solid or a liquid after the following procedure: the binder composition for a non-aqueous secondary battery including the binder polymer (P) is weighed out in an amount of 1 g, is placed on an aluminum dish having a diameter of 5 cm, is placed into a dryer, and is dried at 1 atmosphere (1013 hPa) at a temperature of 105°C for 1 hour while circulating the air in the dryer.

The content ratio of the binder polymer (P) contained in the binder for a non-aqueous secondary battery is preferably 80% by mass or more, more preferably 90% by mass or more, further preferably 95% by mass or more, and still further preferably 98% by mass or more. This is because the effect resulting from the inclusion of the binder polymer (P) becomes remarkable.

### (3) Binder composition for non-aqueous secondary battery

The binder composition for a non-aqueous secondary battery of the present disclosure (which may be hereinafter abbreviated as a binder composition.) includes the binder polymer (P) of the present disclosure and the aqueous medium (B). The binder composition may be obtained by mixing the binder polymer (P) of the present disclosure and an aqueous medium, or may be obtained by mixing the binder for a non-aqueous secondary battery of the present disclosure and an aqueous medium.

Incidentally, in the binder composition, the functional group, and the like contained in the binder polymer (P) may react with other components to partially change the structure of the binder polymer (P). In this case, the structure of the binder polymer (P) after the reaction is also referred to as the binder polymer (P). That is, in the binder composition, the binder polymer (P) also includes the corresponding polymer and the structure obtained after the reaction between the polymer and the other components.

The binder composition is preferably an emulsion in which the particles including the binder polymer (P) are dispersed in the aqueous medium (B). As the particles including the binder polymer (P), mention may be made of particles including the binder polymer (P), particles including the binder polymer (P) and a surfactant, and particles further including other components.

Further, the binder composition may be configured such that particles including the binder polymer (P) and particles not including the binder polymer (P) coexist, and the like.

The binder composition may include other components, together with the binder polymer (P) and the aqueous medium (B). Specifically, the binder composition may contain the above-mentioned components and the like used in the synthesis of the binder polymer (P).

The binder composition of the present disclosure may be a dispersion obtained by the emulsion polymerization of the monomer (a). Alternatively, the binder composition of the present disclosure may be a dispersion in which the binder polymer (P) obtained by a method other than emulsion polymerization is dispersed in the aqueous medium (B).

### [Aqueous medium (B)]

The aqueous medium (B) in the binder compositions of the present disclosure is preferably at least one selected from the group consisting of water and a hydrophilic solvent. The hydrophilic solvents may be used singly alone or may be used in combination of two or more thereof.

As the hydrophilic solvents, mention may be made of the same ones as the hydrophilic solvents exemplified as the aqueous media (b) for use in the synthesis of the binder polymer (P). The aqueous medium (B) may be the same as or may be different from the aqueous medium (b) used in the synthesis of binder polymer (P).

When the binder composition is an emulsion obtained by emulsion polymerization, the aqueous medium (B) may be the aqueous medium (b) used for the synthesis of the binder polymer (P). Alternatively, the aqueous medium (B) may also be the one obtained by adding a new aqueous medium to the aqueous medium (b) used for the synthesis of the binder polymer (P). Still alternatively, the aqueous medium (B) may be the one obtained by replacing a part or the whole of the aqueous medium (b) contained in the dispersion resulting from emulsion polymerization with a new aqueous solvent. The new aqueous medium used in this case may have the same composition as that of the aqueous medium (b), or may have a different composition.

### [Nonvolatile content concentration of binder composition]

The nonvolatile content concentration of the binder composition of the present disclosure is preferably 20% by mass or more, more preferably 25% by mass or more, and further preferably 30% by mass or more, from the viewpoint of increasing the amount of the effective components included in the binder composition. The nonvolatile content concentration of the binder composition can be adjusted by the content of the aqueous medium (B) included in the binder composition.

The nonvolatile content concentration of the binder composition is preferably 80% by mass or less, more preferably 70% by mass or less, and further preferably 60% by mass or less, from the viewpoint of suppressing an increase in the viscosity of the binder composition, and making it easier to manufacture an electrode slurry for a non-aqueous secondary battery described later.

The nonvolatile content concentration of the binder composition is determined in the following manner. One gram of the binder composition is weighed, is placed on an aluminum dish with a diameter of 5 cm, is placed in a dryer, and is dried at 1 atmosphere (1013 hPa) at a temperature of 105°C for 1 hour while circulating the air in the dryer. The mass of the binder composition left as a solid or a liquid thereafter is measured.

### (4) Electrode slurry for non-aqueous secondary battery

An electrode slurry for a non-aqueous secondary battery of the present disclosure (which may be hereinafter also referred to as an electrode slurry) includes: the binder polymer (P) of the present disclosure; an electrode active material; and an aqueous medium.

Incidentally, in the electrode slurry, the functional groups and the like contained in the binder polymer (P) may react with other components to partially change the structure of the binder polymer (P). In this case, the structure of the binder polymer (P) after the reaction is also referred to as the binder polymer (P). Namely, in the electrode slurry, the binder polymer (P) also includes the corresponding polymer and the structure of the polymer after the reaction between the polymer and other components.

The binder polymer (P) and the electrode active material contained in the electrode slurry are preferably dispersed in an aqueous medium. The electrode slurry may contain a thickener, a conductive auxiliary, the components used in the synthesis of the binder polymer (P), and the like.

The content of the binder polymer (P) included in the electrode slurry is preferably 0.50 parts by mass or more, more preferably 1.0 part by mass or more, for every 100 parts by mass of the electrode active material. When the content of the binder polymer (P) is within the above range, the effect resulting from the inclusion of the binder polymer (P) tends to be exhibited still more sufficiently.

The content of the binder polymer (P) contained in the electrode slurry is preferably 5.0 parts by mass or less, more preferably 4.0 parts by mass or less, and further preferably 3.0 parts by mass or less, for every 100 parts by mass of the electrode active material. When the content of the binder polymer (P) is within the above range, the content of the electrode active material contained in the electrode slurry can be increased, so that the electrode slurry tends to exhibit excellent charging-discharging characteristics.

### [Electrode active material]

The electrode active material contained in the electrode slurry is a material into and from which ions serving as charge carriers such as lithium ions can be intercalated and deintercalated. The ions serving as charge carriers are preferably alkali metal ions, more preferably lithium ions, sodium ions, and potassium ions, and further preferably lithium ions.

In the case where an electrode for a non-aqueous secondary battery manufactured using an electrode slurry is a negative electrode, the electrode active material is the negative electrode active material. The negative electrode active material preferably includes at least one selected from the group consisting of a carbon material, a material containing silicon, and a material containing titanium. These materials used as the negative electrode active materials may be used singly alone, may be used in combination of two or more thereof, and may be used in a composite form.

Examples of the carbon material used as the negative electrode active material may include cokes such as petroleum coke, pitch coke, and coal coke, carbonized product of an organic polymers, and graphites such as artificial graphite and natural graphite.

Examples of the material containing silicon, which is used as the negative electrode active material, may include a silicon simple substance and a silicon compound such as silicon oxide.

Examples of the material containing titanium, which is used as the negative electrode active material, may include lithium titanate.

Preferably, the negative electrode active material includes at least one selected from the group consisting of a carbon material and a material including silicon. When the negative electrode active material is the above-mentioned material, the effect of improving the binding property between the negative electrode active materials and between the negative electrode active material and the current collector due to the binder polymer (P) included in the electrode slurry tends to be increased.

In the case where an electrode for a non-aqueous secondary battery manufactured using an electrode slurry is a positive electrode, the electrode active material is a positive electrode active material. As the positive electrode active material, a substance nobler in standard electrode potential than the negative electrode active material is used. Specifically, as the positive electrode active material, mention may be made of lithium composite oxides containing nickel such as lithium composite oxides of Ni-Co-Mn system, lithium composite oxides of Ni-Mn-Al system, and lithium composite oxides of Ni-Co-Al system, lithium cobalt oxide (LiCoO₂), spinel type lithium manganate (LiMn₂O₄), olivine type lithium iron phosphate, chalcogen compounds such as TiS₂, MnO₂, MoO₃, and V₂O₅, and the like. The substances used as the positive electrode active materials may be used singly alone, or may be used in combination of two or more thereof.

### [Aqueous medium]

Preferably, the aqueous medium included in the electrode slurries of the present disclosure is one selected from the group consisting of water and hydrophilic solvents. As the hydrophilic solvents, mention may be made of the same ones as the hydrophilic solvents exemplified as the aqueous medium (b) used for synthesizing the binder polymer (P). The aqueous medium included in the electrode slurry may be the same as or different from the aqueous medium (b) used in the synthesis of the binder polymer (P).

### [Thickener]

As the thickeners that can be included in the electrode slurry, mention may be made of cellulose derivatives such as carboxymethyl cellulose (CMC), hydroxyethyl cellulose, and hydroxypropyl cellulose, the ammonium salts of the cellulose derivatives, alkali metal salts of cellulose derivatives, polyvinyl alcohol, polyvinyl pyrrolidone, poly(meth)acrylates, poly(meth)acrylamides, poly(meth)N-hydroxyalkylacrylamide and the like. From the viewpoint of dispersibility of the electrode active material in the electrode slurry, it is preferable that the thickener includes at least one selected from the group consisting of carboxymethyl cellulose, the ammonium salt of carboxymethyl cellulose, and the alkali metal salt of carboxymethyl cellulose.

The content of the thickener included in the electrode slurry is preferably 0.50 parts by mass or more, and more preferably 0.80 parts by mass or more for every 100 parts by mass of the electrode active material. When the content of the thickener is within the above range, the coatability of the electrode slurry for a non-aqueous secondary battery tends to become favorable.

The content of the thickener included in the electrode slurry is preferably 3.0 parts by mass or less, more preferably 2.0 parts by mass or less, and further preferably 1.5 parts by mass or less for every 100 parts by mass of the electrode active material. The binding property between the electrode active materials included in the electrodes for the non-aqueous secondary battery manufactured using the electrode slurry and between the electrode active material and the current collector tends to become favorable.

### [Conductive auxiliary]

As the conductive auxiliary which can be contained in the electrode slurry, mention may be made of carbon black, carbon fiber, and the like. As carbon black, mention may be made of furnace black, acetylene black, Denka black (manufactured by Denka Company Limited), and Ketchen black (manufactured by Ketchen Black International Corporation), or the like. As the carbon fibers, mention may be made of carbon nanotubes, carbon nanofibers, and the like. As the carbon nanotube, mention may be made of VGCF (manufactured by Resonac Corporation) which is a gas phase process carbon fiber.

### [Method for manufacturing electrode slurry]

As a method for manufacturing an electrode slurry of the present disclosure, for example, the binder polymer (P) of the present disclosure, an electrode active material, an aqueous medium, a thickener which is contained, if necessary, a conductive auxiliary which is contained, if necessary, and other components, which are contained if necessary, are mixed. Alternatively, the electrode slurry of the present disclosure may be obtained by mixing the binder for a non-aqueous secondary battery of the present disclosure, an electrode active material, an aqueous medium, a conductive auxiliary, which is contained, if necessary, and other components, which are contained, if necessary, or may be obtained by mixing the binder composition of the present disclosure, an electrode active material, a conductive auxiliary, which is contained, if necessary, and other components, which are contained, if necessary.

The order of mixing of the respective components which are the raw materials for the electrode slurry is not particularly limited, and can be appropriately determined. As a method for mixing the respective components, mention may be made of a method using a mixing device of a stirring type, a rotary type, a shaking type, or the like.

### (5) Electrode for non-aqueous secondary battery

The electrode for a non-aqueous secondary battery of the present disclosure includes the binder polymer (P) of the present disclosure. In the following description, the term "electrode" means an electrode for a non-aqueous secondary battery unless otherwise specified.

Incidentally, in the electrode, the functional groups, and the like included in the binder polymer (P) may react to partially change the structure of the binder polymer (P). In this case, the structure of the binder polymer (P) after the reaction is also referred to as the binder polymer (P). That is, in the electrode, the binder polymer (P) includes the corresponding polymer and the structure of the polymer after the polymer has reacted and changed.

The electrode generally includes a current collector and an electrode active material layer formed on the current collector. As the shape of the electrode, mention may be made of a laminate, a wound body, or the like, and the shape thereof is not particularly limited.

The forming range of the electrode active material layer on the current collector is not particularly limited, and the electrode active material layer may be formed on the entire surface of the current collector, or the electrode active material layer may be formed only on a partial surface on the current collector. When the current collector is in a shape of a plate, foil, or the like, the electrode active material layers may be formed on both sides of the current collector, or may be formed only on one side.

### [Current collector]

The current collector is preferably a metal sheet. As the metals forming the metal sheet, mention may be made of iron, copper, aluminum, nickel, stainless steel, and the like. When the electrode of the present disclosure is a negative electrode of a lithium ion secondary battery, the current collector is preferably copper foil.
The thickness of the metal sheet is not particularly limited, and is preferably 0.001 mm to 0.5 mm.

### [Electrode active material layer]

The electrode active material layer includes the polymer (P) for the binder and the electrode active material of the present disclosure. The electrode active material layer may contain a conductive auxiliary, a thickener, or the like. As the electrode active material, the conductive auxiliary, and the thickener, the same ones as those exemplified as the components of the electrode slurry can be used.

### [Method for manufacturing electrode]

The electrode of the present disclosure can be manufactured, for example, in the following manner. First, an electrode slurry of the present disclosure is applied on a current collector. Subsequently, the electrode slurry is dried to obtain an electrode sheet having an electrode active material layer formed on the current collector. Thereafter, if necessary, the electrode sheet is cut into a size and a shape suitable for the size, the shape, and the like of the non-aqueous secondary battery to obtain electrodes. Incidentally, when cutting is not necessary, the electrode sheet may be used as it is as an electrode.

The method for applying the electrode slurry onto a current collector is not particularly limited, and examples thereof may include a reverse roll method, a direct roll method, a doctor blade method, a knife method, an extrusion method, a curtain method, a gravure method, a bar method, a dip method, and a squeeze method. Among these application methods, in consideration of various physical properties such as the viscosity and the drying property of the electrode slurry, at least one method selected from the group consisting of a direct roll method, a doctor blade method, a knife method, or an extrusion method is preferably used. When these methods are applied, there is a tendency that an electrode active material layer having a smooth surface and a small thickness variation can be obtained.

In the case where the electrode slurry is applied to both sides of the current collector, the slurry may be applied to one side at a time sequentially, or may be applied to both sides at a time. Further, the electrode slurry may be applied continuously or may be applied intermittently onto the current collector. The amount of the electrode slurry to be applied can be appropriately determined according to the designed capacity of the battery, the composition of the electrode slurry, or the like.

The method for drying the electrode slurry applied onto the current collector is not particularly limited. For example, hot air drying, low pressure drying, vacuum drying, (far) infrared drying, low-temperature air drying, or a combination thereof can be used.

The drying temperature and the drying time for drying the electrode slurry can be adjusted as appropriate depending on the concentration of the nonvolatile content in the electrode slurry, and the application amount of the current collector, or the like. The drying temperature is preferably 40°C to 350°C, and from the viewpoint of the productivity, the drying temperature is more preferably 60°C to 100°C. The drying time is preferably 1 minute to 30 minutes.

The electrode sheet having the electrode active material layer formed on the current collector may be cut in order to have a suitable size and shape as an electrode. The method for cutting the electrode sheet is not particularly limited. Slits, laser, wire cut, cutter, Thomson or the like can be used.

In the present disclosure, the electrode sheet may be pressed, if necessary, before or after cutting the electrode sheet. As a result of this, the electrode active material can be more strongly bound to the current collector, and the non-aqueous secondary battery can be made smaller by reduction of the thickness of the electrode.

As the method for pressing the electrode sheet, general methods can be used. As the pressing method, it is particularly preferable to use a mold pressing method or a roll press method.

When a mold pressing method is used, the pressing pressure is not particularly limited, and is preferably 0.5 t/cm² to 5 t/cm².

When a roll press method is used, the pressing load is not particularly limited, and is preferably set at 0.5 t/cm to 8 t/cm. When the pressing load is set within the above-mentioned range, the above-mentioned effects due to pressing are easily obtained, and the reduction of the intercalation and deintercalation capacity of charge carriers such as lithium ions into and from the electrode active material tends to be able to be suppressed.

### (6) Non-aqueous secondary battery

The non-aqueous secondary battery of the present disclosure includes the electrode for a non-aqueous secondary battery of the present disclosure.

Below, as one preferable example of the non-aqueous secondary battery according to the present disclosure, a lithium ion secondary battery will be described. Incidentally, the configuration of the non-aqueous secondary battery of the present disclosure is not limited to the examples described below.

One example of a lithium ion secondary battery has a configuration in which a positive electrode, a negative electrode, and an electrolytic solution are accommodated in an exterior body. The lithium ion secondary battery may include, for example, a separator between a positive electrode and a negative electrode, or may include other members, other than the foregoing configuration. The shape of the lithium ion secondary battery may be any shape of a coin shape, a button shape, a sheet shape, a cylindrical shape, a rectangular shape, a flat shape, and the like.

### [Positive electrode and negative electrode]

For the lithium ion secondary batteries of the present disclosure, one or both of the positive electrode and the negative electrode include the binder polymer (P) of the present disclosure. The binder polymer (P) is preferably included in the electrode active material layer of the electrode. It is preferable that at least the negative electrode of the positive electrode and the negative electrode includes the binder polymer (P), and it is more preferable that the negative electrode includes an electrode active material layer including the binder polymer (P).

When in the lithium ion secondary battery of the present disclosure, only one electrode of the positive electrode and the negative electrode includes the binder polymer (P) of the present disclosure, the other electrode includes, as a binder, polyvinylidene fluoride or the like.

### [Electrolytic solution]

As the electrolytic solution, a non-aqueous liquid having ionic conductivity is preferably used. As the electrolytic solutions, mention may be made of a solution in which an electrolyte is dissolved in an organic solvent, an ionic liquid, and the like. From the viewpoint of obtaining a lithium ion secondary battery having a low manufacturing cost and a low internal resistance, the former is preferable.

As the electrolyte, an alkali metal salt can be used, and can be selected appropriately according to the kind of the electrode active material, and the like. As the electrolyte, mention may be made of LiClO₄, LiBF₆, LiPF₆, LiCF₃SO₃, LiCF₃CO₂ LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, aliphatic lithium carboxylate, or the like. Further, other alkali metal salts can be used as the electrolytes.

The organic solvents for dissolving the electrolyte are not particularly limited, and include carbonic acid ester compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), carboxylic acid esters such as ethyl acetate, propyl acetate, methyl propionate, ethyl propionate, and propyl propionate, and the like. The organic solvents may be used singly alone, or may be used in combination of two or more thereof. Of these, as the organic solvents, two or more kinds of linear carbonate type solvents are preferably used in combination.

The electrolytic solution may include additives in addition to the above-mentioned components. Examples of additives may include nitrile compounds, sulfur-containing compounds, and boron-containing compounds. As the nitrile compounds, mention may be made of succinonitrile, acetonitrile, and the like. As the sulfur-containing compounds, mention may be made of compounds having a sulfonyl group, a sulfonate group, or a sultone structure such as methyl ethyl sulfone and 1,3-propanesultone. As the boron-containing compound, mention may be made of boric acid esters.

### [Exterior body]

As the exterior body, the one formed with an aluminum laminate material including aluminum foil and a resin film or the like can be appropriately used, and the present invention is not limited thereto.

### [Examples]

Hereinafter, examples of embodiments of the present disclosure will be described in detail with reference to Examples, but the embodiments are not limited to these Examples.

In the following Examples, negative electrodes of lithium ion secondary batteries were manufactured as an Example of the electrode for a non-aqueous secondary battery of the present disclosure, and lithium ion secondary batteries were manufactured as an example of the non-aqueous secondary batteries, which were compared with the negative electrodes of the lithium ion secondary batteries and the lithium ion secondary batteries of Comparative Examples, respectively. The water used in the following Examples and Comparative Examples is ion exchanged water, unless otherwise specified.

### <Manufacturing of binder polymer and binder composition for non-aqueous secondary battery>

In each of Examples and Comparative Examples, respective monomers were mixed in their respective amounts shown in Table 1 or Table 2, thereby manufacturing emulsions. The numerical values in the "mass%" column in Tables 1 and 2 indicate the content ratio (mass%) of each monomer relative to the total amount of the monomers. The numerical values in the "mol%" column in Tables 1 and 2 represent the content ratio (mol%) of each monomer relative to the total amount (mol) of (a1) to (a4).

Then, an aqueous solution was manufactured by dissolving polymerization initiators (e) in the amounts shown in Table 1 or Table 2 in 50 parts by mass of water, respectively.

Into a separable flask having a cooling tube, a thermometer, a stirrer, and a dropping funnel, 150 parts by mass of water was charged, and the temperature was raised to 80°C. To the separable flask, the monomer emulsion and the aqueous solution including the polymerization initiator (e) dissolved therein were respectively continuously supplied with stirring at 80°C for 3 hours to effect emulsion polymerization, thereby obtaining emulsions including particles including the binder polymers of Examples 1 to 7, or Comparative Examples 1 to 4, and an aqueous medium.

The resulting emulsion was cooled to room temperature (25°C). Thereafter, 133 parts by mass of water and 25% by mass of ammonia water were added. As a result of this, the binder compositions for a non-aqueous secondary batteries of Examples 1 to 7 and Comparative Examples 1 to 4 that were the emulsions in which the particles including the binder polymer of Examples 1 to 7 or Comparative Examples 1 to 4 were dispersed in an aqueous medium were manufactured.

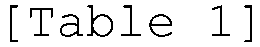

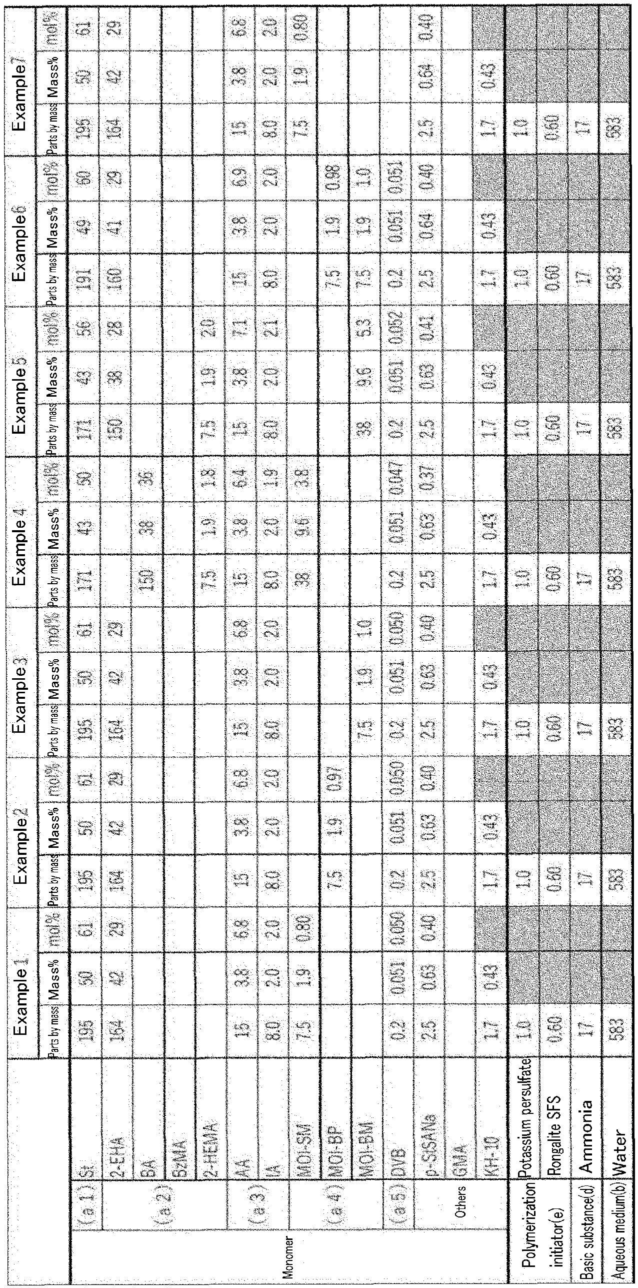

**[Table 2]**

| | | | Comparative Example1 | | | Comparative Example2 | | | Comparative Example3 | | | Comparative Example4 | | |
|---|---|---|---|---|---|---|---|---|---|---|---|---|---|---|
| | | | Parts by mass | Mass% | mol% | Parts by mass | Mass% | mol% | Parts by mass | Mass% | mol% | Parts by mass | Mass% | mol% |
| Monomer | (a1) | St | 195 | 50 | 62 | 195 | 50 | 62 | | | | | | |
| | (a 2) | 2-EHA | 164 | 42 | 29 | 164 | 42 | 29 | 164 | 42 | 39 | 164 | 42 | 39 |
| | | BA | | | | | | | | | | | | |
| | | BzMA | | | | | | | 195 | 50 | 48 | 195 | 50 | 48 |
| | | 2-HEMA | | | | | | | | | | | | |
| | (a 3) | AA | 15 | 3.9 | 6.9 | 15 | 3.8 | 6.9 | 15 | 3.8 | 9.1 | 15 | 3.8 | 9.1 |
| | | IA | 8.0 | 2.1 | 2.0 | 8.0 | 2.0 | 2.0 | 8.0 | 2.0 | 2.7 | 8.0 | 2.0 | 2.7 |
| | (a 4) | MOI-SM | | | | | | | | | | | | |
| | | MOI-BP | | | | | | | 7.5 | 1.9 | 1.3 | | | |
| | | MOI-BM | | | | | | | | | | 7.5 | 1.9 | 1.3 |
| | (a 5) | DVB | 0.2 | 0.052 | 0.051 | 0.2 | 0.051 | 0.051 | 0.2 | 0.051 | 0.067 | 0.2 | 0.051 | 0.067 |
| | Others | p-StSANa | 2.5 | 0.65 | 0.40 | 2.5 | 0.63 | 0.40 | 2.5 | 0.63 | 0.53 | 2.5 | 0.63 | 0.53 |
| | | GMA | | | | 7.5 | 1.9 | 1.7 | | | | | | |
| | | KH-10 | 1.7 | 0.43 | | 1.7 | 0.43 | | 1.68 | 0.43 | | 1.68 | 0.43 | |
| Polymerization initiator(e) | | Potassium persulfate | 1.0 | | | 1.0 | | | 1.0 | | | 1.0 | | |
| | | Rongalite SFS | 0.60 | | | 0.60 | | | 0.60 | | | 0.60 | | |
| 3asic substance(d | | Ammonia | 17 | | | 17 | | | 17 | | | 17 | | |
| Aqueous medium(b) | | Water | 583 | | | 583 | | | 583 | | | 583 | | |

The abbreviations of monomers in Tables 1 and 2 represents the following:
St: Styrene
2-EHA: 2-Ethylhexyl acrylate
BA: Butyl acrylate
BzMA: Benzyl methacrylate
2-HEMA: 2-Hydroxyethyl methacrylate
AA: Acrylic acid
IA: Itaconic acid
DVB: Divinylbenzene
p-StSANa: Sodium p-styrene sulfonate
GMA: Glycidyl methacrylate
KH-10: Polyoxyethylene-1-(allyloxymethyl)alkyl ether sulfate ammonium salt (Aquarone KH-10, polymerizable surfactant, manufactured by DKS Co., Ltd.)

As the isocyanate monomer (a4), a compound having a methacryloyloxy group and a blocked isocyanato group was used. Specifically, the following were used.
MOI-SM: 2-[[[2-[(2-methyl-1-oxo-2-propen-1-yl)oxy]ethyl]amino]carbonyl]oxy]-methyl benzoate (KARENZ (registered trademark) MOI-SM, manufactured by Resonac Corporation)
MOI-BP: 2-[(3,5-dimethylpyrazolyl)carbonylamino]ethyl methacrylate (KARENZ MOI-BP, (manufactured by Resonac Corporation)
MOI-BM: 2-[0-(1'-methylpropylidenamino)carboxyamino]ethyl methacrylate (KARENZ MOI-BM (manufactured by Resonac Corporation)

Rongalite SFS in the polymerization initiator (e) is the trade name of Rongalite manufactured by SUMITOMO SEIKA CHEMICALS Co., Ltd.

The amount of ammonia as the basic substance (d) shown in Table 1 or Table 2 is the amount of ammonia contained in aqueous ammonia (parts by mass).

The amount of water as the aqueous medium (b) shown in Table 1 or Table 2 is the total amount (parts by mass) of water contained in the binder composition for a non-aqueous secondary battery.

### [Measurement of glass transition point Tg]

The binder compositions for a non-aqueous secondary battery of Examples 1 to 7 or Comparative Examples 1 to 4 were applied onto a release PET (polyethylene terephthalate) film, and were dried at 50°C for 5 hours. In this manner, a film having a thickness of 2 mm including the binder polymer was obtained.

Square specimens 2 mm in length and 2 mm in width were cut out from the obtained film. The specimen was sealed hermetically in an aluminum pan, and using a differential scanning calorimeter (EXSTAR DSC/SS7020, manufactured by Hitachi High-Tech Science Co., Ltd.), under a nitrogen gas atmosphere at a heating rate of 10°C/ min, the differential scanning calorimetry (DSC) measurement of the specimen was performed. The temperature range for the DSC measurements was set at -40°C to 200°C. Then, the peak top temperature of the DDSC chart obtained as a temperature differential of DSC was measured, and this temperature was referred to as the glass transition point Tg (°C) of the binder polymer.

### [Measurement of nonvolatile content concentration of binder composition]

Each binder composition for a non-aqueous secondary battery of Examples 1 to 7 or Comparative Examples 1 to 4 was weighed in an amount of 1 g, was placed on an aluminum dish having a diameter of 5 cm, and was placed into a dryer. The binder composition was dried for 1 hour at 1 atmosphere (1013 hPa) and at a temperature of 105°C while circulating the air in the dryer, and the mass of the remaining components was measured. The mass ratio (mass%) of the components left after drying to the mass (1g) of the binder composition for a non-aqueous secondary battery before drying was calculated, and the result was referred to as the nonvolatile content concentration (mass%).

### <Manufacturing of non-aqueous secondary battery>

Using each of the binder compositions for a non-aqueous secondary battery of Examples 1 to 7 and Comparative Examples 1 to 4, a negative electrode was manufactured in the following manner. Using the negative electrode, a lithium ion secondary battery that is each non-aqueous secondary battery of Examples 1 to 7 and Comparative Examples 1 to 4 was manufactured.

### (Manufacturing of positive electrode)

Ninety four parts by mass of LiNi_{0.6}Mn_{0.2}Co_{0.2}O₂ as a positive electrode active material, 3 parts by mass of acetylene black as a conductive auxiliary, and 3 parts by mass of polyvinylidene fluoride as a binder were mixed, resulting in a mixture. To the resulting mixture, 50 parts by mass of N-methylpyrrolidone was added for further mixing, resulting in a positive electrode slurry.

As the positive electrode current collector, aluminum foil having a thickness of 15 µm was prepared. A positive electrode slurry was applied onto both sides of the positive electrode current collector by a direct roll method. The amount of the positive electrode slurry to be applied to the positive electrode current collector was adjusted such that the thickness of the positive electrode slurry after a roll-press treatment described later may become 125 µm per one surface.

The positive electrode slurry applied onto the positive electrode current collector was dried at 120°C for 5 minutes, and pressed by a roll press method using a roll press (press load 5 t/cm, roll width 7 cm, manufactured by THANK-METAL Co., Ltd.), resulting in a positive electrode sheet having positive electrode active material layers on both sides of the positive electrode current collector. The resulting positive electrode sheet was cut into a rectangular shape 50 mm in length and 40 mm in width, and was provided with conductive tabs, resulting in a positive electrode.

### (Manufacturing of negative electrode (electrode for non-aqueous secondary battery))

As negative electrode active materials, 96.9 parts by mass of artificial graphite (G49, manufactured by Jiangxi Zichen Technology Co., Ltd.), 3.6 parts by mass of any of the binder compositions for a non-aqueous secondary battery manufactured in Examples 1 to 7 and Comparative Examples 1 to 4 (1.4 parts by mass of non-volatile content (binder polymer)), 60 parts by mass of a 2 mass% aqueous solution of CMC (carboxymethyl cellulose-sodium salt, SUNROSE MAC 500LC manufactured by NIPPON PAPER Chemicals CO., LTD.) were mixed, and further, 16 parts by mass of water was added, and the mixture was mixed using a planetary centrifugal mixer(ARE-310, manufactured by THINKY CORPORATION), resulting in a negative electrode slurry (slurry for an electrode for a non-aqueous secondary battery).

Copper foil having a thickness of 10 µm was prepared as the negative electrode current collector. The negative electrode slurry was applied onto both sides of the negative electrode current collector by the direct roll method. The amount of the negative electrode slurry to be applied to the negative electrode current collector was adjusted such that the thickness after a roll press treatment described later may become 170 µm per one surface.

The negative electrode slurry applied onto the negative electrode current collector was dried at 90°C for 10 minutes and was pressed by a roll press method using a roll press (press load 8 t/cm, roll width 7 cm, manufactured by THANK-METAL Co., Ltd.), resulting in a negative electrode sheet having negative electrode active material layers on both sides of the negative electrode current collector. The resulting negative electrode sheet was cut into a rectangular shape 52 mm in length and 42 mm in width, and was provided with conductive tabs, resulting in negative electrodes.

### (Manufacturing of lithium ion secondary battery (non-aqueous secondary battery))

The positive electrode active material layer and the negative electrode active material layer were stacked so as to oppose each other with a separator (made of polyethylene, thickness 25 µm) including a polyolefin-based porous film interposed between the positive electrode and the negative electrode, and were accommodated in an exterior body (battery pack) including an aluminum laminated material. Subsequently, an electrolytic solution was poured into the exterior body, vacuum pressure impregnation was performed, and packing was performed by a vacuum heat sealer, resulting in a lithium ion secondary battery.

As the electrolytic solution, there was used the mixture of 99 parts by mass of solution obtained by dissolving LiPF₆ into a mixed solvent including ethylene carbonate (EC), ethyl methyl carbonate (EMC) and diethyl carbonate (DEC) in a volume ratio of EC: EMC: DEC = 30: 50:20, at a concentration of 1.0 mol/L and 1 part by mass of vinylene carbonate.

### <Evaluation of non-aqueous secondary battery>

For the lithium-ion secondary batteries of Examples 1 to 7 and Comparative Examples 1 to 4, respectively, the discharge capacity retention rate after 500 cycles, the discharge capacity retention rate after 4-week storage at 60°C, and the internal resistance (DCR) increase rate after 4-week storage at 60°C were evaluated by the methods shown below. The results are shown in Table 3.

### [Discharge capacity retention rate after 500 cycles]

Under the condition of 45°C, a charging-discharging was conducted with the following series of operations of steps (i) to (iv) shown below as one cycle. The time integration value of the current in the steps (i) and (ii) was referred to as the charge capacity, and the time integration value of the current in the step (iv) was referred to as the discharge capacity. Then, the discharge capacity at the first cycle and the discharge capacity at the 500th cycle were measured, and the discharge capacity retention rate after 500 cycles was calculated by the following equation. 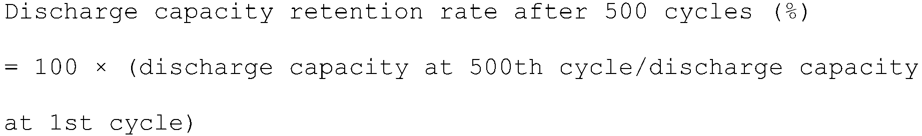 Discharge capacity retention rate after 500 cycles (%) = 100 × (discharge capacity at 500th cycle/discharge capacity at 1st cycle)
(i) Charging is performed with a current of 1 C until voltage becomes 4.2 V (constant current (CC) charging).
(ii) Charging is performed at a voltage of 4.2 V until the current becomes 0.05 C (constant voltage (CV) charging).
(iii) The battery is allowed to stand still for 30 minutes.
(iv) Discharging is performed with a current of 1 C until the voltage becomes 2.75 V (constant current (CC) discharging).

### [Discharge capacity retention rate after 60°C 4-week storage]

After CC charging is performed with a current of 1 C until the voltage becomes 4.2 V under the condition of 25°C, CV charging is performed until the current becomes 0.05 C. Then, CC discharging is carried out with a current of 1 C up to a voltage of 2.75 V, and the discharge capacity obtained at that time is defined as the discharge capacity before storage. Thereafter, CC charging is carried out again with a current of 1 C until the voltage reaches 4.2 V, and then CV charging is carried out until the current reaches 0.05 C, resulting in a fully charged battery. The resulting fully charged battery was allowed to stand still under the condition of 60°C for 4 weeks. Then, CC discharging is performed under the condition of 25°C again with a current of 1 C until the voltage reaches 2.75 V, and the discharge capacity obtained at that time is defined as the discharge capacity after storage. From the discharge capacity before storage and the discharge capacity after storage, the discharge capacity retention rate after 60°C 4-week storage is calculated according to the following equation. $\begin{matrix}Discharge capacity retention rate \left(%\right) after 60 ° C 4 - week \\ storage \\ = 100 \times \left(\begin{matrix}discharge capacity after storage / discharge capacity \\ before storage\end{matrix}\right)\end{matrix}$

### [Internal resistance (DCR) increase rate after 60°C 4-week storage]

The internal resistance (DCR (Ω)) of the lithium ion secondary battery is measured under the condition of 25°C by the following procedure. That is, constant current charging/discharging was performed at 0.2 C from the rest potential up to a voltage of 3.6 V, and the charged state was set at 50% (SOC 50%) of the initial capacity. Thereafter, discharging was carried out for 60 seconds with each current value of 0.2 C, 0.5 C, 1 C, and 2 C. The internal resistance DCR (Ω) at a SOC of 50% was determined from the relationship between these four current values (values per second) and the voltages.

The internal resistances (DCR) obtained by the above procedure were measured by the following stages (1) and (2), respectively.
(1) Before storage for 4 weeks under the conditions of full charging and 60°C
(2) After storage for 4 weeks under the conditions of full charging and 60°C
   the internal resistance (DCR) measured in (1) was referred to as pre-storage DCR, and the internal resistance (DCR) measured in (2) was referred to as post-storage DCR. Thus, the internal resistance (DCR) increase rate after 60°C 4-week storage was calculated by the following equation. $\begin{matrix}Internal resistance \left(DCR\right) increase rate \left(%\right) after 60 ° C 4 - week \\ storage \\ = 100 \times \left(post-storage DCR/pre-storage DCR\right)\end{matrix}$

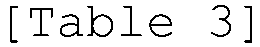

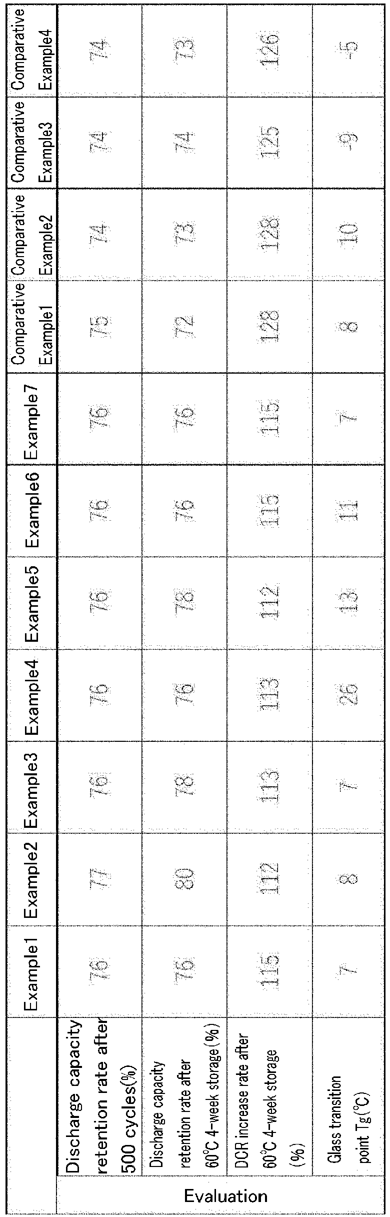

### <Evaluation results>

As shown in Table 3, it could be confirmed that the lithium ion secondary batteries of Examples 1 to 7 had a higher discharge capacity retention rate after 60°C 4-week storage as compared with the lithium ion secondary batteries of Comparative Example 1 to 4. This is presumed to be due to the fact that the binder polymer included in the negative electrodes of the lithium ion secondary batteries of Examples 1 to 7 is a copolymer including the structural units derived from the monomer (a1) to the monomer (a4) shown in Table 1.

Also, as shown in Table 3, it could be confirmed that the lithium ion secondary batteries of Examples 1 to 7 were suppressed lower in terms of the DCR increase rate after 60°C 4-week storage as compared with the lithium ion secondary batteries of Comparative Examples 1 to 4. This is presumed to be due to the fact that the binder polymer included in the negative electrodes of the lithium ion secondary batteries of Examples 1 to 7 is a copolymer including the structural units derived from the monomer (a1) to the monomer (a4) shown in Table 1.

Incidentally, as shown in Table 3, it could be confirmed that the discharge capacity retention rates after 500 cycles of the lithium ion secondary batteries of Examples 1 to 7 were equal to or greater than those of the lithium ion secondary batteries of Comparative Examples 1 to 4. This is presumed to be due to the fact that the binder polymer included in the negative electrodes of the lithium ion secondary batteries of Examples 1 to 7 is a copolymer including the structural units derived from the monomer (a1) to the monomer (a4) shown in Table 1.

The disclosures of Japanese Patent Application No. 2023-214286, Japanese Patent Application No. 2024-188626 and Japanese Patent Application No. 2024-188627 are incorporated in the present description by reference in their entirety. All publications, patent applications, and technical standards referred to herein are incorporated by reference in their entirety to the same extent as if each individual publication, patent application, and technical standard were specifically and individually indicated to be incorporated by reference.

## Claims

1. A binder polymer for a non-aqueous secondary battery, comprising:
a first structural unit derived from an aromatic hydrocarbon monomer (a1) which is an aromatic compound having one ethylenically unsaturated bond, and including a hydrocarbon;
a second structural unit derived from a nonionic monomer (a2) which has one ethylenically unsaturated bond, and is a nonionic (meth)acrylic acid ester;
a third structural unit derived from a carboxylic acid monomer (a3) which is a compound having one ethylenically unsaturated bond, and at least one selected from the group consisting of a carboxy group and a carboxy group forming a salt; and
a fourth structural unit derived from an isocyanate monomer (a4) which is a compound having one ethylenically unsaturated bond, and at least one selected from the group consisting of an isocyanato group and a blocked isocyanato group.

2. The binder polymer for a non-aqueous secondary battery according to claim 1, wherein the blocked isocyanato group has a structure generating an isocyanato group by at least one selected from the group consisting of heating, voltage application, and a chemical reaction.

3. The binder polymer for a non-aqueous secondary battery according to claim 1, wherein a content ratio of the first structural unit in a total amount of the first structural unit, the second structural unit, the third structural unit, and the fourth structural unit is 35 mol% to 80 mol%.

4. The binder polymer for a non-aqueous secondary battery according to claim 1, wherein a content ratio of the second structural unit in a total amount of the first structural unit, the second structural unit, the third structural unit, and the fourth structural unit is 10 mol% to 55 mol%.

5. The binder polymer for a non-aqueous secondary battery according to claim 1, wherein a content ratio of the third structural unit in a total amount of the first structural unit, the second structural unit, the third structural unit, and the fourth structural unit is 1.0 mol% to 20 mol%.

6. The binder polymer for a non-aqueous secondary battery according to claim 1, wherein a content ratio of the fourth structural unit in a total amount of the first structural unit, the second structural unit, the third structural unit, and the fourth structural unit is 0.10 mol% to 15 mol%.

7. The binder polymer for a non-aqueous secondary battery according to claim 1, further comprising a fifth structural unit derived from a multifunctional monomer (a5) which is a compound having a plurality of independent ethylenically unsaturated bonds.

8. The binder polymer for a non-aqueous secondary battery according to claim 7, wherein a content ratio of the fifth structural unit relative to a total content of the first structural unit, the second structural unit, the third structural unit, and the fourth structural unit is 0.010 mol% to 5.0 mol%.

9. The binder polymer for a non-aqueous secondary battery according to claim 1, wherein a total content ratio of the first structural unit, the second structural unit, the third structural unit, and the fourth structural unit is 90% by mass or more.

10. A binder for a non-aqueous secondary battery comprising the binder polymer for a non-aqueous secondary battery according to any one of claims 1 to 9.

11. A binder composition for a non-aqueous secondary battery comprising the binder polymer for a non-aqueous secondary battery according to any one of claims 1 to 9, and an aqueous medium.

12. An electrode slurry for a non-aqueous secondary battery, comprising the binder polymer for a non-aqueous secondary battery according to any one of claims 1 to 9, an electrode active material, and an aqueous medium.

13. An electrode for a non-aqueous secondary battery, comprising the binder polymer for a non-aqueous secondary battery according to any one of claims 1 to 9.

14. A non-aqueous secondary battery comprising the electrode for a non-aqueous secondary battery according to claim 13.

15. A method for manufacturing the binder polymer for a non-aqueous secondary battery according to any one of claims 1 to 9, comprising:
performing copolymerization using the aromatic hydrocarbon monomer (a1), the nonionic monomer (a2), the carboxylic acid monomer (a3) and the isocyanate monomer (a4).

16. A method for manufacturing a binder for a non-aqueous secondary battery, comprising: mixing the binder polymer for a non-aqueous secondary battery according to any one of claims 1 to 9.

17. A method for manufacturing a binder composition for a non-aqueous secondary battery, comprising: mixing the binder polymer for a non-aqueous secondary battery according to any one of claims 1 to 9 and an aqueous medium.

18. A method for manufacturing a binder composition for a non-aqueous secondary battery, comprising: mixing the binder for a non-aqueous secondary battery according to claim 10 and an aqueous medium.

19. A method for manufacturing an electrode slurry for a non-aqueous secondary battery, comprising mixing the binder polymer for a non-aqueous secondary battery according to any one of claims 1 to 9, an electrode active material, and an aqueous medium.

20. A method for manufacturing an electrode slurry for a non-aqueous secondary battery, comprising mixing the binder for a non-aqueous secondary battery according to claim 10, an electrode active material, and an aqueous medium.

21. A method for manufacturing an electrode slurry for a non-aqueous secondary battery, comprising: mixing the binder composition for a non-aqueous secondary battery according to claim 11 and an electrode active material.

22. A method for manufacturing an electrode for a non-aqueous secondary battery, comprising: applying the electrode slurry for a non-aqueous secondary battery according to claim 12 onto at least a portion of a surface of a current collector for drying.
